# EUROPEAN PATENT SPECIFICATION

(11) **EP 3 036 409 B1**
(45) Date of publication and mention of the grant of the patent: **24.10.2018**
(21) Application number: 14838594.1
(22) Date of filing: 15.08.2014
(51) Int. Cl.: F01D 25/16, F16C 35/02, F16C 32/06, F16C 43/02, F16C 37/00

(54) **AIR BEARING ARRANGEMENT**
LUFTLAGERANORDNUNG
AGENCEMENT DE PALIER À AIR

(30) Priority: 20.08.2013 DE 102013216458
(43) Date of publication of application: 29.06.2016
(73) Proprietor: Borgwarner Inc., Auburn Hills, MI 48326 (US)
(72) Inventor: METZ, Dietmar, 67149 Meckenheim (DE); MUELLER, Martin, 67346 Speyer (DE)
(74) Representative: Peterreins Schley
(86) International application number: PCT/US2014/051269
(87) International publication number: WO 2015/026655

(56) References cited:
- WO-A2-2013/028507
- WO-A2-2013/028507
- JP-A- H01 242 816
- JP-A- 2002 061 645
- JP-A- 2008 261 495
- KR-A- 20010 063 915
- KR-A- 20100 095 237
- US-A- 4 552 466
- US-A- 4 795 274
- US-A- 5 427 455
- US-A- 5 658 079
- US-A- 5 871 284
- US-A1- 2008 310 779
- US-A1- 2008 310 779

## Description

### BACKROUND

US 5 871 284 A discloses a spring assembly for a foil thrust bearing set including a stiffener disc and a plurality of spring segments. Each spring segment has at least two anchoring tabs. When inserted into a slot in the stiffener disc, the anchoring tabs anchor the spring segment to the stiffener disc.

KR 2001 0063915 discloses a foil thrust bearing structure including a base member having a plurality of slots, a plurality of insertable backing foils inserted into the slots of the base member, and a plurality of insertable contact foils fixedly inserted into the slots of the base member which are elastically supported by the backing foils.

US 4 552 466 A discloses an air bearing structure to prevent destructive bending moments within the top foil. Welds are eliminated by mounting the top bearing foil in the bearing cartridge sleeve without using a spacer block. Tabs or pins at the end of the top bearing foil are restrained by slots or stops formed in the cartridge sleeve. These structural members are free to move in a direction normal to the shaft while being restrained from movement in the direction of shaft rotation.

US 4 795 274 A discloses a fluid film foil bearing having a resilient trailing edge support whereby a bearing sheet of the pad assembly is fixed to a mounting block which in turn is supported by a resilient member in a slot of the journal sleeve.

US 2008/310779 A1 discloses a hydrodynamic fluid film bearing assembly with a stationary retaining member and a plurality of foil subassemblies. Thereby, the complaint foils and the spring foil of each foil subassembly are held within the retaining member in such a way that sliding travel of one compliant foil along the inner surface of the opening is in the opposite rotational direction of sliding travel of the other compliant foil and the spring foil. The foil subassemblies may be restrained from undesired movement during operation by a retention tab extending from the foil subassembly which engages a channel and recess feature formed in the retaining member.

### DESCRIPTION

The invention relates to an axial air bearing arrangement as per the preamble of claim 1 and to a radial air bearing arrangement as per the preamble of claim 9. Other embodiments are described in the dependent claims.

Air bearing arrangements have a base support. This can be, for example, a component part of a housing of a turbocharger. A bearing plate and a spring plate are arranged in the base support. The bearing plate is shaped in accordance with the shaft to be mounted and rests against the shaft, if the shaft is not rotating. If the shaft begins to rotate, an air cushion begins to build up between the outer surface of the shaft and the inner surface of the bearing plate, so that the bearing plate lifts off from the shaft counter to the pressure of the spring plate and therefore the shaft is mounted in a virtually wear-free manner by way of an air cushion. For this purpose, the bearing plate and the spring plate are arranged in the base support. This base support can represent both a bearing sleeve and a housing component.

It is an object of the present invention to provide air bearing arrangements of the type indicated in the preamble of claims 1 and 9 which can have a simple construction and can be mounted easily.

This object is achieved by the features of the independent claims. The dependent claims relate to preferred refinements of the invention.

In the axial air bearing arrangement and in the radial air bearing arrangement, provision is made in each case according to the invention of a plurality of pairs of spring plate and bearing plate. The spring plates and bearing plates at least in groups have a multi-part design as separate plates, i.e. they are not connected to one another via a ring. "At least in groups" in this context means that two or more adjacent plates can by all means be connected to one another.

Within the context of the axial and radial air bearing arrangement, it is preferably provided that at least one fastening tab is formed on the spring plate and/or on the bearing plate. The fastening tab projects into a cutout in the base support. A spring element is preferably located in turn on the fastening tab. The fastening tab can be fixed to the base support by means of this spring element. Particularly when the plates have a multi-part design, the use of fastening tabs with spring elements simplifies the mounting of the plates, since said fastening tabs can independently hold firm in the cutouts during assembly of the air bearing arrangement.

In the preferred embodiment, the invention solves the problem relating to fastening in a simple manner by small fastening tabs, optionally with the spring elements. As a result, the bearing plates and/or spring plates can be held down on the base support and are securely fixed in the assembly process.

The at least one spring element both in the radial air bearing arrangement and in the axial air bearing arrangement can be used for connecting the fastening tab to the base support in a form-fitting and/or in a force-fitting manner. In the case of the form-fitting connection, the spring element engages behind the base support. In the case of the force-fitting connection, the spring element spreads apart into the base support.

In the axial air bearing arrangement, the spring plates and bearing plates are preferably arranged so as to overlap one another and are distributed along the circumference. A plurality of pairs each consisting of one spring plate and one bearing plate are located along the circumference. In this respect, in each case at least one fastening tab of a spring plate is inserted in a further cutout in an adjacent bearing plate. It is preferable that a holder is formed on at least one spring plate, and a holding region is located on at least one bearing plate. The holder of the spring plate of a first pair overlaps with the holding region of the bearing plate of an adjacent pair. The overlapping and stable arrangement is thus formed. In the process, the spring plate with the holder presses the holding region of the bearing plate down.

Instead of the designation "air bearing arrangement", it is also possible to refer to a "foil bearing arrangement".

Further details, features and advantages of the invention become apparent from the following description of exemplary embodiments with reference to the drawing,
in which:
Figure 1 shows a radial air bearing arrangement according to the invention as per a first exemplary embodiment,
Figure 2 shows a base support of the illustration shown in Figure 1,
Figure 3 shows a spring plate of the illustration shown in Figure 1,
Figure 4 shows a bearing plate of the illustration shown in Figure 1,
Figure 5 shows an axial air bearing arrangement according to the invention as per a second exemplary embodiment,
Figure 6 shows a spring plate of the illustration shown in Figure 5,
Figure 7 shows a bearing plate of the illustration shown in Figure 5,
Figure 8 shows the axial air bearing arrangement according to the invention as per the second exemplary embodiment during assembly, and
Figure 9 shows a possible use for the air bearing arrangements according to the invention of both exemplary embodiments.

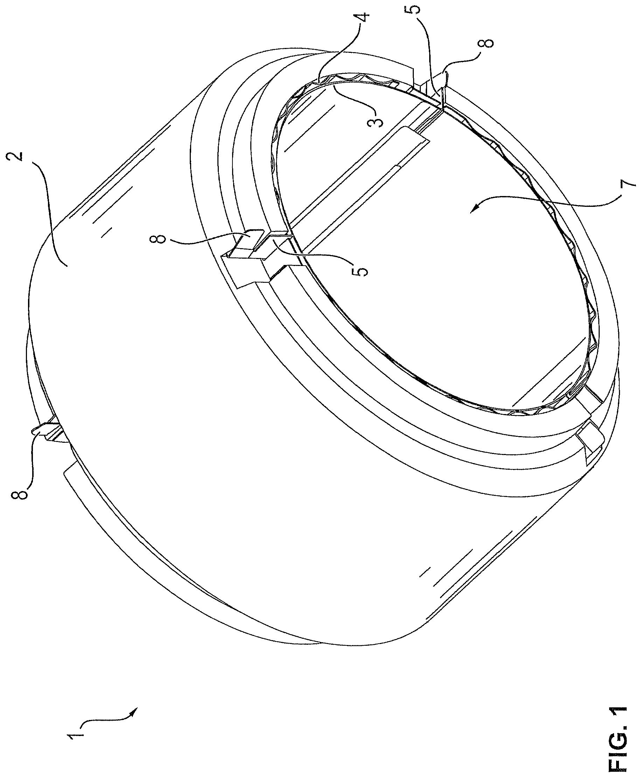

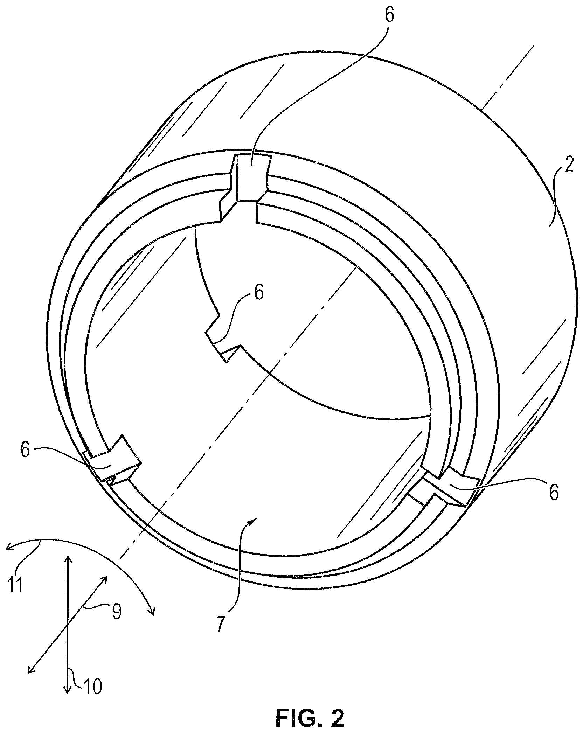

Figure 1 shows an isometric view of a radial air bearing arrangement 1. The radial air bearing arrangement 1 comprises a cylindrical base support 2 with a central cylindrical recess 7. The base support 2 is, for example, a bearing shell or is an integral component part for example of a turbine housing of a turbocharger. The base support 2 is shown in detail in Figure 2. A shaft (not shown) is seated in the recess 7 and is mounted by the radial air bearing arrangement 1. As shown in Figure 2, the base support 2 comprises three cutouts 6 on each of its end faces.

Axial directions 9 pointing in opposite directions, radial directions 10 pointing in opposite directions and circumferential directions 11 pointing clockwise and counterclockwise are defined with respect to the radial air bearing arrangement 1 for the explanation of components which are arranged in relation to one another.

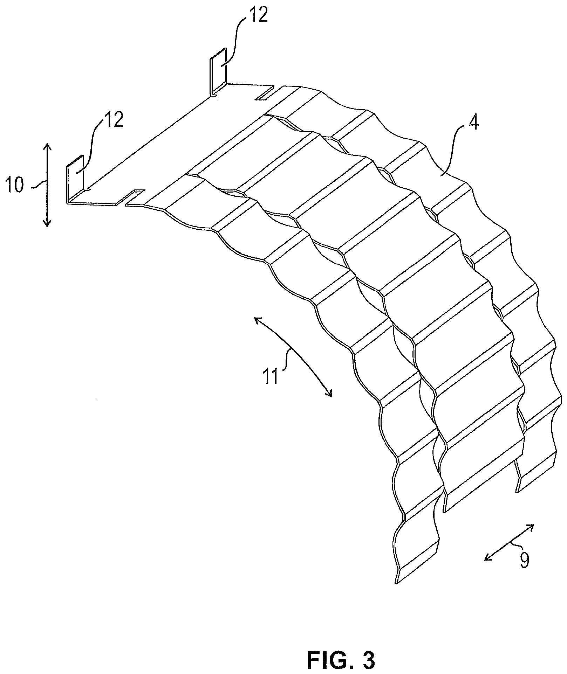

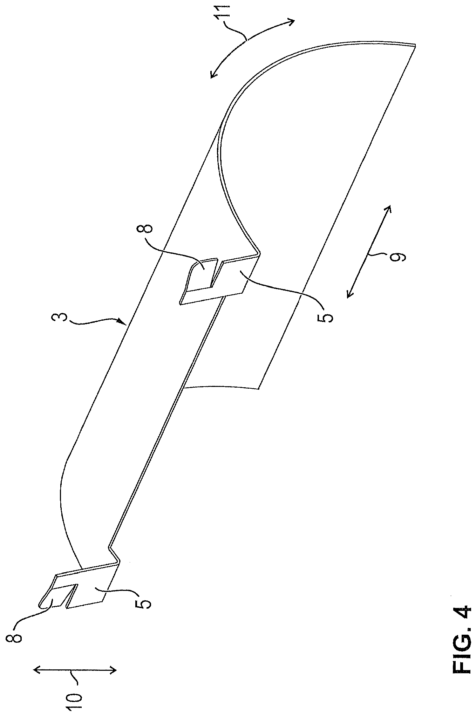

The radial air bearing arrangement 1 furthermore comprises a plurality of bearing plates 3 and a plurality of spring plates 4. One of the spring plates 4 is shown in Figure 3. Figure 4 shows one of the bearing plates 3 in detail.

Each bearing plate 3 has two fastening tabs 5. The fastening tabs 5 extend in the radial direction 10. Spring elements 8 are formed at the ends of each of the fastening tabs 5. The bearing plate 3, the fastening tabs 5 and the spring elements 8 are produced together in one piece, for example as a stamped and bent part.

Each spring plate 4 has two additional tabs 12, which likewise extend in the radial direction 10. In the assembled state as shown in Figure 1, both the fastening tabs 5 and the additional tabs 12 each project into the cutouts 6 on the base support 2.

The spring elements 8 are formed in such a way that they engage behind the base support 2 at a radial outer side. As a result, the spring elements 8 ensure that there is a form-fitting connection between the respective bearing plate 3 and the base support 2. As a consequence of this, the connection with the spring elements 8 can also be referred to as a latching connection. In this case, the spring element 8 accordingly represents the latching lug, which engages behind the base support 2.

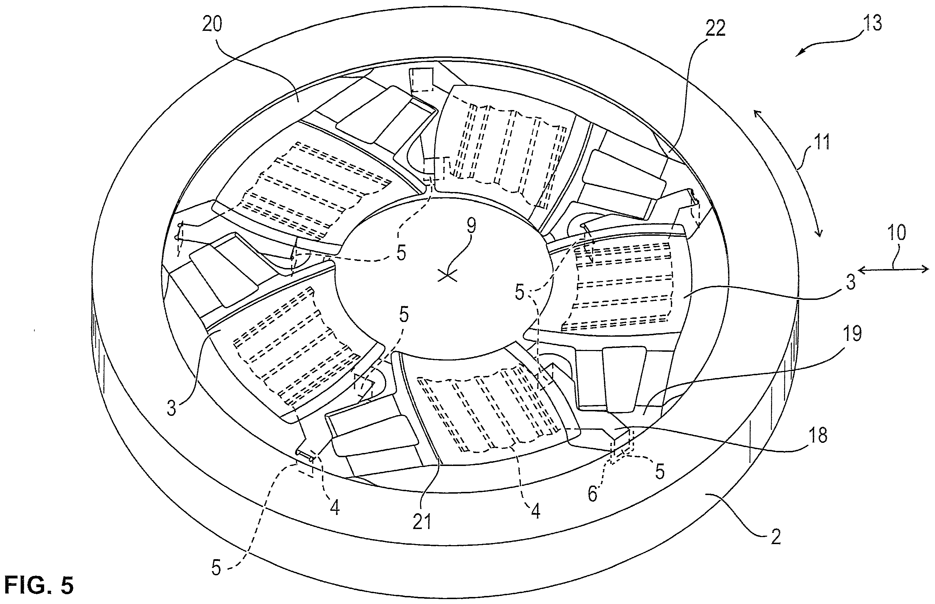

Figure 5 shows an axial air bearing arrangement 13. Identical or functionally identical components are denoted by the same reference numerals in all of the exemplary embodiments.

A plurality of separate bearing plates 3 and spring plates 4 are likewise provided. In each case one bearing plate 3 and one spring plate 4 form a pair with one lying on the other. The individual pairs are arranged distributed over the base support 2 along the circumferential direction 11. The base support 2 with the bearing plates 3 and spring plates 4 arranged thereon is configured for rotatable assembly on a counter disk (not shown).

As is shown by the dashed illustration in Figure 5, each spring plate 4 has two fastening tabs 5. The fastening tabs 5 project in the axial direction 9 into cutouts 6 (shown purely schematically) in the base support 2. When the air bearing arrangement 13 rotates with respect to a counter disk (not shown), ventilation stages 21 which have been stamped in bring about a buildup of pressure between the bearing plates 4 and the counter disk.

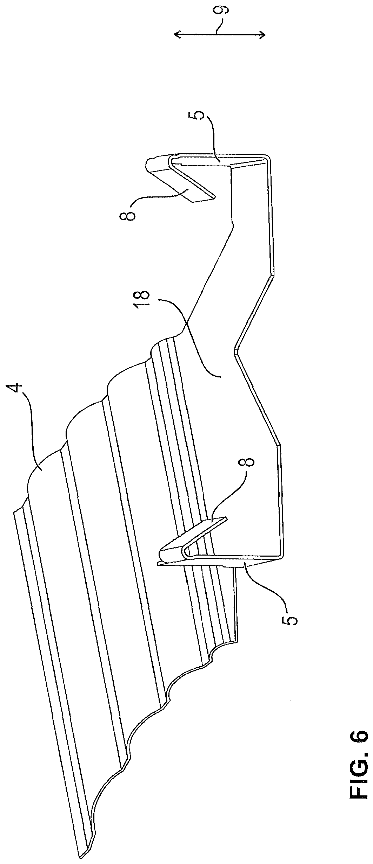

Figure 6 shows the design of a spring plate 4 in detail. Here, spring elements 8 are provided in turn at the end of the fastening tabs 5. These spring elements 8 are bent ends of the fastening tabs 5. The spring elements 8 ensure that the spring plates 4 are fixed in the cutouts 6 in the base support 2. In this respect, there are two variants: On the one hand, the spring elements 8 can anchor in the cutouts 6 in a force-fitting manner. On the other hand, it is possible that the spring elements 8 engage behind the base support 2 on an axially opposite side and therefore provide for a form-fitting connection.

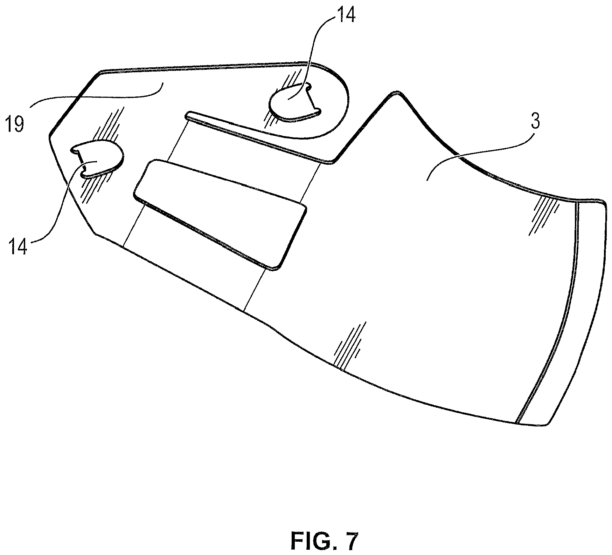

Figure 7 shows one of the bearing plates 3 of the second exemplary embodiment. Each bearing plate 3 has two further cutouts 14. In the second exemplary embodiment, the fastening tabs 5 are inserted not only into the cutouts 6 in the base support 2, but also into the further cutouts 14 in an adjacent bearing plate 3.

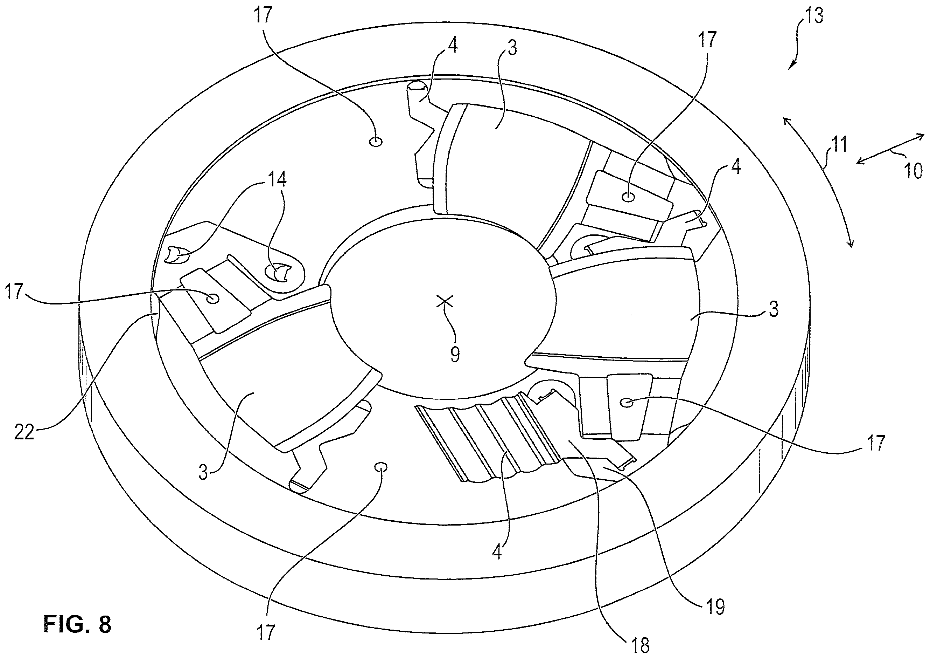

This assembly is shown in detail in Figure 8. Individual bearing plates 3 and individual spring plates 4 have been omitted in Figure 8. It can be seen that in each case the fastening tabs 5 of a spring plate 4 are inserted into the further cutouts 14 in an adjacent bearing plate 13. An overlapping and therefore stable arrangement is thus formed for the axial air bearing arrangement 13.

A spring plate holding region 18 is formed on each of the spring plates 4, and a bearing plate holding region 19 is located on each bearing plate 3. The spring plate holding regions 18 of the spring plates 4 overlap in each case with the bearing plate holding region 19 of the bearing plates 3 of the adjacent pair. The overlapping and stable arrangement is thus formed.

Figure 8 furthermore shows ventilation holes 17 in the bearing plates 3 and in the base support 2. The ventilation holes 17 in the bearing plates 3 are aligned in each case with a ventilation hole 17 in the base support 2. Supporting lugs 22 extending areally from the bearing plate holding regions 19 support the bearing plates 3 against twisting about the axial direction 9.

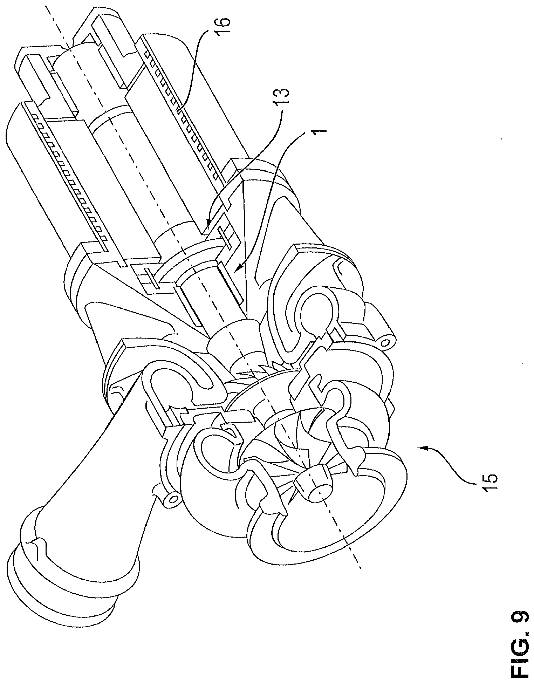

Figure 9 shows an exemplary use for the radial air bearing arrangement 1 and the axial air bearing arrangement 13. Figure 9 shows a turbocharger 15 with a flanged electric machine 16. The rotor shaft of the electric machine 16 or the turbine shaft of the turbocharger 15 is in this case mounted by way of the radial air bearing arrangement 1 and the axial air bearing arrangement 13 as per the exemplary embodiments.

In addition to the above written disclosure of the invention, reference is hereby explicitly made to the illustrative presentation thereof in Figures 1 to 9. The invention is defined by the appended claims only.

### LIST OF REFERENCE SIGNS

- 1: Radial air bearing arrangement
- 2: Base support
- 3: Bearing plate
- 4: Spring plate
- 5: Fastening tab
- 6: Cutout
- 7: Recess
- 8: Spring element
- 9: Axial direction
- 10: Radial direction
- 11: Circumferential direction
- 12: Additional tabs
- 13: Axial air bearing arrangement
- 14: Further cutout
- 15: Turbocharger
- 16: Electric machine
- 17: Ventilation holes
- 18: Spring plate holding region
- 19: Bearing plate holding region
- 20: End face
- 21: Ventilation stage
- 22: Supporting lugs

## Claims

1. An axial air bearing arrangement (13), comprising:
- a base support (2) with an end face (20) for axially mounting a shaft,
- a plurality of bearing plates (3) arranged on the face (20), and
- a plurality of spring plates (4) arranged between the base support (2) and the respective bearing plate (3), wherein a plurality of pairs, each consisting of one of the bearing plates (3) and of one of the spring plates (4), are located along the circumference, and wherein the bearing plates (3) and the spring plates (4) at least in groups of two or more adjacent plates have a multi-part design as separate plates,
- further comprising at least in each case one fastening tab (5) on the spring plates (4) and/or on the bearing plates (3), wherein the fastening tab (5) projects into a cutout (6) in the base support (2),
**characterized in that** at least one fastening tab (5) is formed on the spring plate (4) of a first pair, a further cutout (14) being formed on the bearing plate (3) of a second adjacent pair, and the fastening tab (5) of the spring plate (4) of the first pair being inserted in the further cutout (14) in the bearing plate (3) of the second pair.

2. The axial air bearing arrangement as claimed in claim 1, wherein a spring element (8) for fixing to the base support (2) is arranged on at least one fastening tab (5).

3. The axial air bearing arrangement as claimed in one of the preceding claims, wherein a spring plate holding region (18) is formed on at least one spring plate (4), and wherein a bearing plate holding region (19) is formed on at least one bearing plate (3), the spring plate holding region (18) of the spring plate (4) of a first pair overlapping the bearing plate holding region (19) of the bearing plate (3) of a second pair.

4. The axial air bearing arrangement as claimed in claim 3, wherein the spring plate (4) with the spring plate holding region (18) presses the bearing plate holding region (19) down.

5. The axial air bearing arrangement as claimed in claim 2 or as claimed in claim 2 and in one of claims 3 and 4, wherein the fastening tab (5) is connected to the base support (2) in a form-fitting manner by means of the spring element (8).

6. The axial air bearing arrangement as claimed in claim 2 or 5 or as claimed in claim 2 and in one of claims 3 and 4, wherein the fastening tab (5) is connected to the base support (2) in a force-fitting manner by means of the spring element (8).

7. The axial air bearing arrangement as claimed in claim 2, 5 or 6 or as claimed in claim 2 and in one of claims 3 and 4, wherein the fastening tab (5) together with the spring element (8) is produced in one piece with the bearing plate (3) or the spring plate (4).

8. The axial air bearing arrangement as claimed in one of the preceding claims, comprising ventilation holes (17) in the base support (2) and in at least one bearing plate (3) and/or in at least one spring plate (4).

9. A radial air bearing arrangement (1), comprising:
- a base support (2) with a cylindrical recess (7) for radially mounting a shaft,
- a plurality of bearing plates (3) arranged in the recess (7), and
- a plurality of spring plates (4) arranged between the base support (2) and the respective bearing plate (3),
wherein the bearing plates (3) and the spring plates (4) at least in groups of two or more adjacent plates have a multi-part design as separate plates,
- further comprising at least one fastening tab (5) on at least one spring plate (4)
and/or on at least one bearing plate (3), wherein the fastening tab (5) projects into a cutout (6) in the base support (2),
**characterized in that** a spring element (8) for fixing to the base support (2) is arranged on at least one fastening tab (5), and
wherein the spring element (8) engages behind the base support (2) at the radial outer side thereof.

10. The radial air bearing arrangement as claimed in claim 9, wherein the fastening tab (5) is connected to the base support (2) in a form-fitting manner by means of the spring element (8).

11. The radial air bearing arrangement as claimed in either of claims 9 and 10, wherein the fastening tab (5) is connected to the base support (2) in a force-fitting manner by means of the spring element (8).

12. A turbocharger having an axial air bearing arrangement as claimed in one of claims 1 to 8 and/or a radial air bearing arrangement as claimed in one of claims 9 to 11.

## Patentansprüche

1. Axiale Luftlageranordnung (13), aufweisend:
- einen Grundträger (2) mit einer stirnseitigen Fläche (20) zur axialen Lagerung einer Welle,
- mehrere auf der Fläche (20) angeordnete Lagerplatten (3), und
- mehrere zwischen dem Grundträger (2) und der jeweiligen Lagerplatte (3) angeordnete Federplatten (4),
wobei mehrere Paare, die jeweils aus einer der Lagerplatten (3) und aus einer der Federplatten (4) bestehen, entlang des Umfangs angeordnet sind, und
wobei die Lagerplatten (3) und die Federplatten (4) zumindest in Gruppen von zwei oder mehr benachbarten Plattenmehrteilig als separate Plattenausgeführt sind,
- ferner aufweisend mindestens jeweils eine Befestigungslasche (5) an den Federplatten (4) und/oder an den Lagerplatten (3), wobei die Befestigungslasche (5) in eine Aussparung (6) im Grundträger (2) ragt,
**dadurch gekennzeichnet, dass** an der Federplatte (4) eines ersten Paares zumindest eine Befestigungslasche (5) ausgebildet ist, wobei an der Lagerplatte (3) eines zweiten benachbarten Paares eine weitere Aussparung (14) ausgebildet ist, und wobei die Befestigungslasche (5) der Federplatte (4) des ersten Paares in der weiteren Aussparung (14) der Lagerplatte (3) des zweiten Paares steckt.

2. Axiale Luftlageranordnung nach Anspruch 1, wobei an zumindest einer Befestigungslasche (5) ein Federelement (8) zur Fixierung am Grundträger (2) angeordnet ist.

3. Axiale Luftlageranordnung nach einem der vorhergehenden Ansprüche, wobei an zumindest einer Federplatte (4) ein Federplatten-Haltebereich (18) ausgebildet ist, und wobei an zumindest einer Lagerplatte (3) ein Lagerplatten-Haltebereich (19) ausgebildet ist, wobei der Federplatten-Haltebereich (18) der Federplatte (4) eines ersten Paares den Lagerplatten-Haltebereich (19) der Lagerplatte (3) eines zweiten Paares überlappt.

4. Axiale Luftlageranordnung nach Anspruch 3, wobei die Federplatte (4) mit dem Federplatten-Haltebereich (18) den Lagerplatten-Haltebereich (19) niederdrückt.

5. Axiale Luftlageranordnung nach Anspruch 2 oder nach Anspruch 2 und einem der Ansprüche 3 und 4, wobei mittels des Federelementes (8) die Befestigungslasche (5) formschlüssig mit dem Grundträger (2) verbunden ist.

6. Axiale Luftlageranordnung nach Anspruch 2 oder 5 oder nach Anspruch 2 und einem der Ansprüche 3 und 4, wobei mittels des Federelementes (8) die Befestigungslasche (5) kraftschlüssig mit dem Grundträger (2) verbunden ist.

7. Axiale Luftlageranordnung nach Anspruch 2, 5 oder 6 oder nach Anspruch 2 und einem der Ansprüche 3 und 4, wobei die Befestigungslasche (5) samt Federelement (8) einstückig mit der Lagerplatte (3) oder der Federplatte (4) gefertigt ist.

8. Axiale Luftlageranordnung nach einem der vorhergehenden Ansprüche, aufweisend Lüftungslöcher (17) im Grundträger (2) und in zumindest einer Lagerplatte (3) und/oder in zumindest einer Federplatte (4).

9. Radiale Luftlageranordnung (1), aufweisend:
- einen Grundträger (2) mit einer zylindrischen Ausnehmung (7) zur radialen Lagerung einer Welle,
- mehrere in der Ausnehmung (7) angeordnete Lagerplatten (3), und
- mehrere zwischen dem Grundträger (2) und der jeweiligen Lagerplatte (3) angeordnete Federplatten (4),
wobei die Lagerplatten (3) und die Federplatten (4) zumindest in Gruppen von zwei oder mehr benachbarten Platten mehrteilig als separate Platten ausgeführt sind,
- ferner aufweisend zumindest eine Befestigungslasche (5) an zumindest einer Federplatte (4) und/oder an zumindest einer Lagerplatte (3), wobei die Befestigungslasche (5)
in eine Aussparung (6) im Grundträger (2) ragt, **dadurch gekennzeichnet, dass** an zumindest einer Befestigungslasche (5) ein Federelement (8) zur Fixierung am Grundträger (2) angeordnet ist, und
wobei das Federelement (8) den Grundträger (2) an seiner radialen Außenseite hintergreift.

10. Radiale Luftlageranordnung nach Anspruch 9, wobei mittels des Federelementes (8) die Befestigungslasche (5) formschlüssig mit dem Grundträger (2) verbunden ist.

11. Radiale Luftlageranordnung nach einem der Ansprüche 9 und 10, wobei mittels des Federelementes (8) die Befestigungslasche (5) kraftschlüssig mit dem Grundträger (2) verbunden ist.

12. Turbolader mit einer axialen Luftlageranordnung nach einem der Ansprüche 1 bis 8 und/oder einer radialen Luftlageranordnung nach einem der Ansprüche 9 bis 11.

## Revendications

1. Agencement de palier à air axial (13), comprenant:
un support de base (2) présentant une face d'extrémité (20) pour monter axialement un arbre,
une pluralité de plaques de support (3) agencées sur la face (20), et
une pluralité de plaques à ressort (4) agencées entre le support de base (2) et la plaque de support respective (3),
dans lequel une pluralité de paires, constituées chacune de l'une des plaques de support et de l'une des plaques à ressort (4), sont situées le long de la circonférence, et
dans lequel les plaques de support (3) et les plaques à ressort (4) au moins en groupes de deux ou plus de deux plaques adjacentes présentent une conception en plusieurs parties comme des plaques séparées,
comprenant en outre au moins dans chaque cas une languette de fixation (5) sur les plaques à ressort (4) et/ou sur les plaques de support (3), dans lequel la languette de fixation (5) fait saillie dans une découpe (6) dans le support de base (2),
**caractérisé en ce qu'**au moins une languette de fixation (5) est formée sur la plaque à ressort (4) d'une première paire, une découpe supplémentaire (14) étant formée sur la plaque de support (3) d'une deuxième paire adjacente, et la languette de fixation (5) de la plaque à ressort de la première paire étant insérée dans la découpe supplémentaire (14) dans la plaque de support (3) de la deuxième paire.

2. Agencement de palier à air axial selon la revendication 1, dans lequel un élément de ressort (8) à fixer au support de base (2) est agencé sur au moins une languette de fixation (5).

3. Agencement de palier à air axial selon l'une ou l'autre des revendications précédentes, dans lequel au moins une languette de fixation (5) est formée sur la plaque à ressort (4) d'une première paire, une découpe supplémentaire (14) étant formée sur la plaque de support (3) d'une deuxième paire, et la languette de fixation (5) de la plaque à ressort (4) de la première paire étant insérée dans la découpe supplémentaire (14) dans la plaque de support (3) de la second paire.

4. Agencement de palier à air axial selon la revendication 3, dans lequel la plaque à ressort (4) avec la région de maintien de plaque à ressort (18) presse la région de maintien de plaque de support (19) vers le bas.

5. Agencement de palier à air axial selon la revendication 2 ou selon la revendications 2 et l'une des revendications 3 et 4, dans lequel la languette de fixation (5) est connectée au support de base (2) par un engagement ajusté à l'aide de l'élément de ressort (8).

6. Agencement de palier à air axial selon la revendication 2 ou 5 ou selon la revendications 2 et l'une des revendications 3 et 4, dans lequel la languette de fixation (5) est connectée au support de base (2) par un engagement ajusté à l'aide de l'élément de ressort (8).

7. Agencement de palier à air axial selon la revendication 2, 5 ou 6 ou selon la revendications 2 et l'une des revendications 3 et 4, dans lequel la languette de fixation (5) de concert avec l'élément de ressort (8) sont produits d'une seule pièce avec la plaque de support (3) ou la plaque à ressort (4).

8. Agencement de palier à air axial selon l'une des revendications précédentes, comportant des trous de ventilation (17) dans le support de base (2) et dans au moins une plaque de support (3) et/ou dans au moins une plaque à ressort (4).

9. Agencement de palier à air radial (1), comprenant:
un support de base (2) comportant un évidement cylindrique (7) pour monter radialement un arbre,
une pluralité de plaques de support (3) agencées dans l'évidement (7), et
une pluralité de plaques à ressort (4) agencées entre le support de base (2) et la plaque de support respective (3),
dans lequel les plaques de support (3) et les plaques à ressort (4) au moins en groupes de deux ou plus de deux plaques adjacentes présentent une conception en plusieurs parties comme des plaques séparées,
comprenant en outre au moins une languette de fixation (5) sur au moins une plaque à ressort (4) et/ou sur au moins une plaque de support (3), dans lequel la languette de fixation (5) fait saillie dans une découpe (6) dans le support de base (2),
**caractérisé en ce qu'**un élément de ressort (8) pour fixer le support de base (2) est agencé sur au moins une languette de fixation (5), et
dans lequel l'élément de ressort (8) s'engage derrière le support de base (2) au niveau du côté extérieur radial de celui-ci.

10. Agencement de palier à air radial selon la revendication 9, dans lequel la languette de fixation (5) est connectée au support de base (2) par un engagement ajusté à l'aide de l'élément de ressort (8).

11. Agencement de palier à air radial selon les revendications 9 et 10, dans lequel la languette de fixation (5) est connectée au support de base (2) par un engagement ajusté à l'aide de l'élément de ressort (8).

12. Turbocompresseur présentant un agencement de palier à air axial selon l'une des revendications 1 à 8 et/ou un agencement de palier à air radial selon l'une des revendications 9 à 11.
